# EUROPEAN PATENT SPECIFICATION

(11) **EP 0 427 369 B1**
(45) Date of publication and mention of the grant of the patent: **21.02.1996**
(21) Application number: 90304666.2
(22) Date of filing: 30.04.1990
(51) Int. Cl.: G11B 15/087, G11B 15/02, G11B 15/18

(54) **Data tape apparatus**
Datenbandgerät
Appareil pour de bandes des données

(30) Priority: 09.11.1989 US 435009
(43) Date of publication of application: 15.05.1991
(73) Proprietor: Conner Peripherals, Inc., San José California 95134-2128 (US)
(72) Inventor: Richmond, Robert C., Laguna Hills, California 92653 (US)
(74) Representative: Beresford, Keith Denis Lewis

(56) References cited:
- EP-A- 0 249 482
- EP-A- 0 312 106
- EP-A- 0 323 890
- EP-A- 0 329 265
- EP-A- 0 338 245
- EP-A- 0 339 932
- US-H- 516 069
- NEC RESEARCH & DEVELOPMENT, no. 92, January 1989, pages 77-80, Tokyo, JP; Y. MOTOYAMA et al.: "A digital audio taperecorder (DAT) file"

## Description

### BACKGROUND OF THE INVENTION

The disclosed invention is directed generally to computer storage digital audio tape (DAT) drives, and more particularly is directed to a computer data storage DAT drive that automatically recognizes the presence of audio data on a DAT tape and provides for proper playback of the audio tape.

Digital audio tape (DAT) technology, which was developed for audio programming, has been adapted for storage of computer data. An example of a format for the storage of computer data utilizing DAT technology is the American National Standards Institute (ANSI) Digital Data Storage (DDS) standard, presently in draft form ("PROPOSED AMERICAN NATIONAL STANDARD HELICAL-SCAN DIGITAL COMPUTER TAPE CARTRIDGE 381 mm (0.150 in) FOR INFORMATION INTERCHANGE," ASC X3 Project No. 668-D).

The characteristics that have made DAT technology attractive for computer data storage include high capacity, high transfer rate capability, relatively small media size and low media cost, and the adaptability of DAT technology to conform with personal computer storage device form factors including the 5-1/4 and 3-1/2 inch forms.

The use of DAT technology for storage of computer data can be achieved by application of a data storage format such as the above-referenced ANSI DDS format, to the DAT format. In particular, the DAT physical track format is retained, but the contents of the information stored in the tracks is in accordance with the computer data storage format.

As a result of the use of the DAT physical tape format, a computer storage DAT drive can provide some of the functions for reading DAT audio tapes. Thus, for example, a computer storage DAT drive would be able to extract the PCM data and the subcode information from a DAT audio tape, but typically would not recognize the tape. Nor would it have the capability of providing an audio output signal, either in digital or analog form.

A further consideration with format detection with a computer storage DAT drive is the procedure by which the tape format is detected. For example, pursuant to the DDS format, a tape is positioned near the beginning of the tape to permit unambiguous format detection, for example, for a re-recorded data tape that had been previously recorded with audio. On a DDS tape, the area containing format information is at some distance from the beginning of the tape media, and searching for the format detection area on a DAT data tape at normal playback speed takes a relatively long time. However, the format detection area on a DAT data tape is relatively small and thus cannot be read at high speeds such as X200 (200 times normal playback speed designated as X1).

### SUMMARY OF THE INVENTION

It would therefore be an advantage to provide a computer storage DAT drive that distinguishes between DAT audio tapes and DAT computer data storage tapes, and which provides an audio output signal pursuant to an audio tape.

Another advantage would be to provide a computer storage DAT drive that efficiently and quickly determines the tape format with minimum tape and mechanism wear.

European Patent Specification No. EP-A-0,329,265 which is reflected in the prior art portions of claims 1 and 7 discloses a method of testing a data storage tape by using a section of the tape the relative displacement of which forms the beginning of media position (BOM) is known.

In accordance with one aspect of the present invention there is provided a method as set out in claim 1.

The present invention also provides apparatus as set out in claim 7.

### BRIEF DESCRIPTION OF THE DRAWINGS

The advantages and features of the disclosed invention will readily be appreciated by persons skilled in the art from the following detailed description when read in conjunction with the drawing wherein:

FIG. 1A schematically illustrates the initial portion of a physical DAT tape format utilised for computer data storage.

FIG. 1B schematically illustrates the initial portion of a physical DAT tape format utilized for audio data storage.

FIG. 2 is a block diagram of a data storage DAT drive in accordance with the invention.

FIG. 3 is a timing diagram showing speed and tape format detection functions relative to elapsed time.

FIG. 4 is a flow diagram of an illustrative tape format detection process in accordance with the invention.

### DETAILED DESCRIPTION OF THE DISCLOSURE

In the following detailed description and in the several figures of the drawing, like elements are identified with like reference numerals.

By way of illustrative example, the disclosed invention can be implemented generally in accordance with the ANSI DDS standard, and by way of illustration the following disclosure is based upon compliance with certain aspects of the DDS standard at least as to the tape layout for the beginning of the tape. However, it should be readily appreciated by persons skilled in the art from a reading of the subject disclosure that other data storage formats can be utilized to implement the invention.

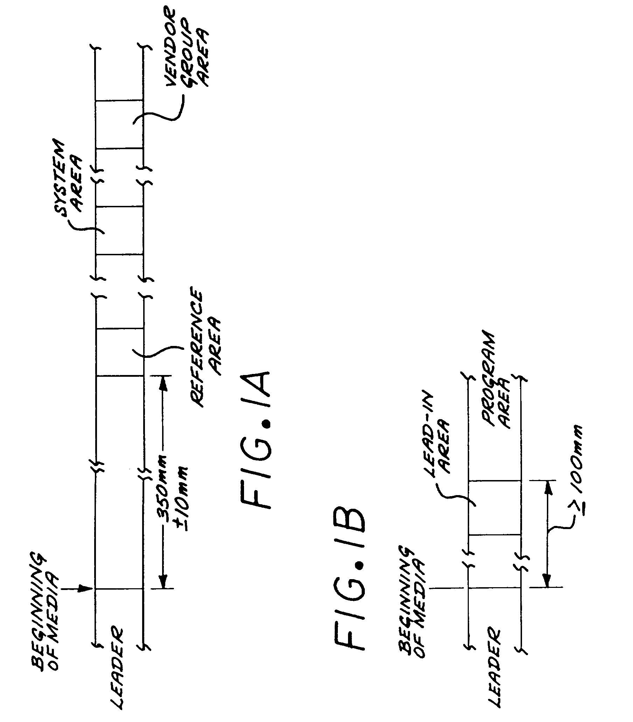

FIGS. 1A and 1B schematically depict the initial portions of the respective physical tape formats for a DAT DDS data tape and a DAT audio tape, which are helpful in understanding the subject invention.

Referring in particular to FIG. 1A, in a DAT DDS data tape, a Reference Area begins at 350 mm, ±10 mm, from the beginning of the tape media (BOM) which is where the magnetic tape is joined to the tape leader. The location at the beginning of the Reference area is also called the logical Beginning of Tape (BOT). The Reference Area is followed by a System Area, which in turn is followed by a Vendor Group Area. Areas between the Reference Area, System Area, and Vendor Group Area can contain subcode information pursuant to the DDS format.

The subcode information in the Reference Area and the System Area include tape format identification information, for example, in the Data ID code of subcode blocks in accordance with the ANSI DDS standard. However, the Reference and System Areas are relatively short and, thus, cannot be read at high speeds such as X200, which is 200 times normal playback speed designated as X1. In accordance with the ANSI DDS standard, the System Area includes subcode data which is read for appropriate initialization. The Vendor Group Area includes frame data which must be read at the normal playback speed X1.

Referring now to FIG. 1B, the initial portion of a DAT audio tape is not as explicitly defined as a DAT DDS data tape. In a DAT audio tape, the first program area begins at a location greater than or equal to 100 mm from the BOM. Prior to the Program Area is a Lead-In Area which includes subcode information containing tape format identification information, for example, in the Data ID code of subcode blocks in accordance with the DAT format. The Lead-In Area can be read at higher than normal play-back speed, but the playback speed must be reduced for reading of the Program Area. Typically, the Program Area includes an initial Pause Area which is followed by the program information.

In a DAT audio tape the distance from the BOM to the first Program Area will not be much greater than 100 mm, and the format identification information for a DAT audio tape generally will be detected closer to the BOM than on a DAT DDS data tape.

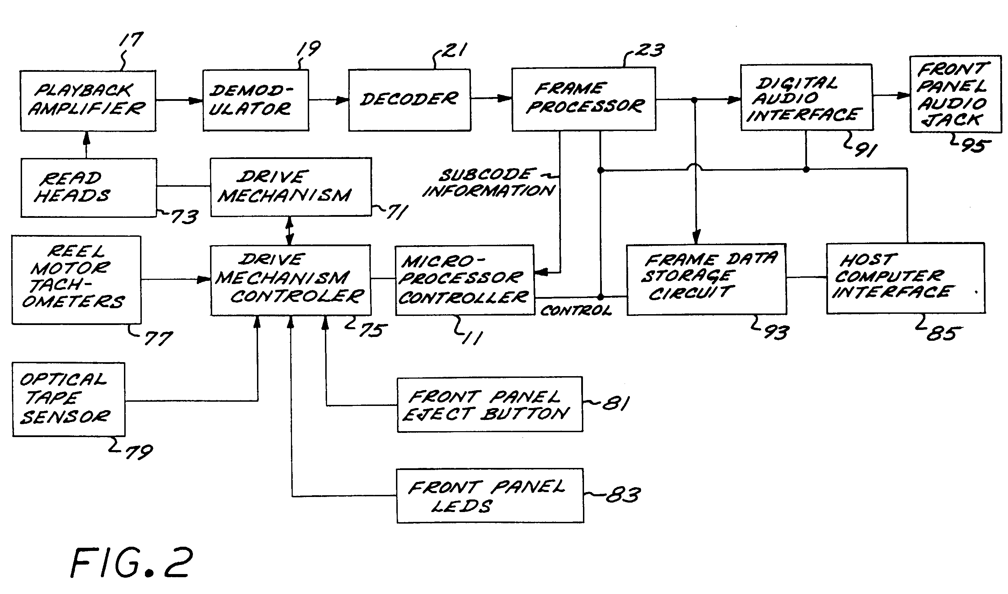

Referring now to FIG. 2, shown therein is a generalized block diagram of components of a computer storage DAT drive in accordance with the invention for detecting and distinguishing DAT data tapes and DAT audio tapes.

A microprocessor controller 11 provides overall control, and comprises, for example, a microprocessor, memory elements, and input/output circuitry. A tape drive mechanism 71 drives rotating tape read heads 73 and is controlled by a drive mechanism controller 75 which in turn is controlled by the microprocessor controller 11. By way of example, the drive mechanism controller 75 can be microprocessor based controller. The tape drive mechanism would include standard mechanical components such as a head cylinder, a capstan, tape reel guides, tape reel motors, and so forth.

Respective reel motor tachometers 77 are responsive to the rotation of the reel motors in the drive mechanism 71 and provide to the drive mechanism controller 75 tachometer signals (e.g., a predetermined number of pulses per revolution) indicative of the speeds of rotation of the tape reel motors. The tachometer signals are utilized by the drive mechanism controller 75 to control the reel motor speeds, and, as discussed further herein, are also utilized to determine total tape length and to determine amount of tape played.

An optical tape sensor 79 coupled to the drive mechanism controller 75 is utilized to sense the BOM which is the junction between the transparent tape leader and the magnetic tape, for example, during rewind or when tape is being played. The drive mechansim controller 75 further receives an input signal from a front panel eject push button 81, and provides outputs to front panel LED's 83, as described further herein.

The microprocessor controller 11 is connected to a host computer via an interface 85, for example, a SCSI interface, or it can comprise microprocessor circuitry of the host computer.

A tape playback amplifier 17 responsive to the read heads 73 provides its RF playback signal to a demodulator 19 which provides an output comprising a serial bit stream that includes frame data and subcode information. The output of the demodulator 19 is processed by a decoder 21 which provides, for example, a first level of error correction code (ECC) processing on the demodulated signal as well as decomposition of the demodulated data into frame data and subcode information. The subcode information decoded by the decoder 21 is selectively accessed by the microprocessor 11, for example, from a memory in the decoder 21.

The frame data output of the decoder 21 is provided to a frame processor 23 which applies a second level of ECC processing and de-interleaves the frame data from the two tracks comprising a frame to provide a serial frame data output. The serial frame data, which can comprise audio data, is provided to a digital audio interface 91 as well as to a frame storage circuit 93. The digital output of the audio interface 91 is connected to a front panel audio jack which, for example, can be a standard miniature or sub-miniature phone jack. Alternatively, the audio interface 91 would include appropriate digital-to-analog conversion circuitry so as to provide analog audio signals to the front panel audio jack 95.

In accordance with the invention, DAT tape format detection is generally achieved as follows. The tape is rewound completely, which, depending on the drive mechanism and the tape cartridge, can position the tape so that the tape heads are at a location that is ahead of the BOM. Such positioning of the tape with the tape heads near the BOM insures that the tape can be properly identified and that information recorded thereon can be properly read.

The tape is then played back at a medium playback speed, for example, in the range of about X5 to X15 (i.e., about 5 to 15 times normal playback speed). This speed is chosen so that the format identification areas on a DAT data tape can be reached quickly while maintaining the capability of reading the subcode information in the relatively short Reference and System Areas and decelerating to achieve ATF at normal playback speed prior to reading the Vendor Group area. Such medium playback speed also permits fast detection of an audio tape while maintaining the capability of decelerating to normal playback speed for the Program Area. Further, the medium playback speed permits the format detection sequence including speed change to be achieved without a mode change since the tape capstan drive is utilized for medium speed playback.

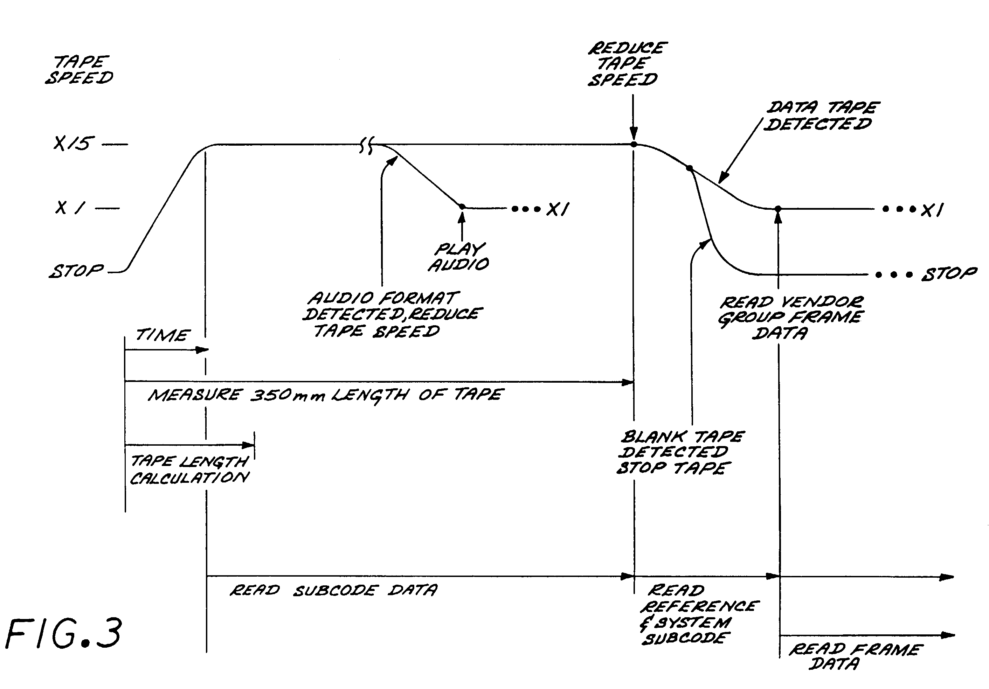

Referring to the timing diagram of FIG. 3, several procedures take place during the medium speed playback, sometimes concurrently:
(A) The data from the initial portion of the tape immediately following the BOM (e.g., about 50 mm) is not read since such area may include data that was not completely erased if the tape was re-recorded with a format different from the format of the prior recording. Also, a part of such initial portion might not be accessible due to the length of the tape leader and the geometry of the tape path.
(B) The total tape length is being determined, for example, by calculation based on the ratio of pulse counts generated by the reel motor tachometers. Tape length information can be utilized to optimize the reel drive motor currents to provide precise tape tension, and can also be utilized by the host computer to determine tape storage capacity.
(C) After the initial portion of the tape media is ignored for data, the subcode tape format information is read.
(D) If an audio is detected, playback speed is reduced to normal playback speed, the digital audio interface 91 is enabled, and the frame data storage circuit 93 is disabled.
(E) If a predetermined amount of tape as specified by the DDS format has been played and an audio tape has not been detected, the tape speed is reduced while reading of the subcode tape format information continues. Such predetermined amount of tape is measured from the BOM, and is achieved, for example, by determining the length of tape played pursuant to calculations based on the reel motor tachometer signals and adjusting for the known geometrical relation between the positions of the optical sensor and the tape head cylinder, and the tape path. Stated another way, if a predetermined location on the tape as specified by the DDS format is reached without detection of an audio format, the tape speed is reduced while subcode information continues to be read.
(F) If a computer data storage tape is not detected, the tape is stopped, and the tape is regarded as a blank tape.
(G) If the subcode format information from the Reference and System Areas identify the tape as a data tape, the frame data storage circuit 93 is enabled, the digital audio interface 91 is disabled, and the tape is read in accordance with the appropriate data format such as DDS. In particular, without additional start/stop tape movement or delay, the subcode information in the System Area is read as part of the DDS initialization procedure, and the Vendor Group Area frame data is read.

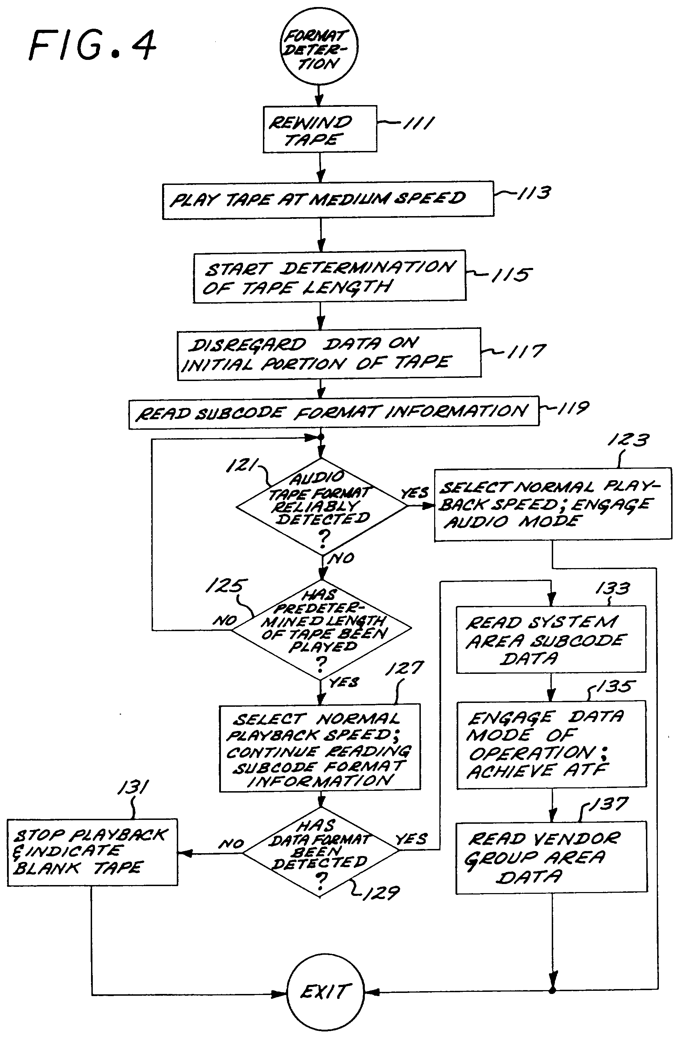

Referring now to FIG. 4, set forth therein is a flow diagram of a process in accordance with the invention for reading and detecting the format of a DAT tape. At 111 the tape is rewound at high speed. Pursuant to 113, the tape is played at medium speed, for example, in the range of X5 to X15. At 115 the process for calculating tape length is started, and at 117 the information from the initial portion of the tape, for example, a length of about 50 mm, is disregarded. After the information from such initial portion of tape is disregarded, the subcode tape format information is read continuously pursuant to 119. At 121 a determination is made as to whether the subcode tape format information reliably indicates that the tape is an audio tape. For example, if the subcode tape format information in a predetermined number of frames, for example, six, indicate an audio format, then an audio tape has been reliably indicated. If the determination at 121 is yes, an audio tape has been reliably detected, at 123 the tape speed is changed to normal playback speed and the audio mode of operation is selected. The format detection process is then exited.

If the determination at 121 is no, an audio tape has not been detected, a determination is made at 125 as to whether the predetermined length of tape called for by the data format has been played. If no, processing continues at 121, described above.

If the determination at 125 is yes, the predetermined tape length has been played, at 127 the tape speed is changed to normal playback speed, and reading of the subcode tape format information continues while the tape is decelerating. At 129 a determination is made as to whether the subcode tape format information indicates a data storage tape format. If no, at 131 the tape is stopped and the presence of a blank tape is indicated. The format detection process is then exited.

If the determination at 129 is yes, the subcode tape format information indicates a data storage format, then at 133 the System Area subcode data is read. At 135 the data mode of operation is selected and ATF (automatic track finding) synchronization is achieved. At 137 the Vendor Group Area frame data is read, and then the format detection process is exited.

In conjunction with the format detection process, the front panel EJECT 81 pushbutton can be utilized to provide control functions as a function of detected format, and the LEDs 83 can provide visual indications of the tape format detected.

For example, in the data mode of operation, pursuant to depression of the EJECT pushbutton, the tape is rewound to the System Area, the system log in the System Area is updated, and the tape is then fully rewound. If data was being recorded to tape, any data in the record buffer is written to tape together with an End of Data marker prior to rewind and log update.

In the audio mode of operation the eject pushbutton can be used to provide some basic controls similar to those available on CD (Compact Disc) players. For example, momentary depression of the Eject button can be defined to cause the current program to be skipped. Momentary depression of the pushbutton during a forward skip can be defined to cause play of the program prior to the one being skipped. Holding down the pushbutton for a predetermined amount of time such as 4 seconds can be defined to cause the audio cartridge to be ejected.

By way of example, the front panel LEDs 83 comprise a cartridge status LED and a drive status LED for providing independent status indications during data mode operation. In particular, the cartridge status LED is on when a cartridge is in the drive mechanism, and the drive status LED is on when the tape is moving.

In the audio mode of operation the LEDs 83 can be controlled to unambiguously indicate an audio tape by providing indications not utilized in the data mode of operation. For example, the LED indicators can be controlled to flash simultaneously at a slow rate to indicate the presence of an audio tape. Alternatively, the cartridge status LED can be controlled to flash at a slow rate to indicate the presence of an audio tape.

In addition to the foregoing, more elaborate control can be provided via the host computer interface 85.

The foregoing has been a disclosure of a computer storage DAT drive that efficiently determines the type of tape being played back, and which provides an audio output signal pursuant to an audio tape. The format detection provided by the drive advantageously minimizes initialization time, and reduces tape and mechanical wear by calculating tape length while the tape is being played back at a medium speed that permits relatively fast detection of a data format tape, instead of utilizing a separate operation for tape length determination. Further, the disclosed computer storage DAT drive transitions from tape format detection to data mode operation without the delay and wear of additional start/stop tape movement. The disclosed computer storage DAT drive also provides the advantages of a front panel audio jack output and front panel audio control via a front panel drive eject pushbutton.

Although the foregoing has been a description and illustration of specific embodiments of the invention, various modifications and changes thereto can be made by persons skilled in the art without departing from the scope and spirit of the invention as defined by the following claims.

## Claims

1. A method for detecting the format of a DAT tape, comprising the steps of:
(a) positioning the tape for reading a predetermined tape reference location to ensure that any tape format identification data on the tape will be encountered in playback (111);
(b) playing the tape at a sufficient speed to allow detection of subcode format identification information (113);
(c) calculating tape length (115);
(d) reading the subcode tape format identification information (119) from the tape; and
(e) engaging a data mode of operation (135) if the subcode tape format identification information indicates a data format (129); characterized by the steps of:
(f) reducing tape speed to normal playback speed if either the subcode tape format identification information reliably indicates an audio format (121,123) or a predetermined amount of tape has been played from a predetermined tape location (125,127).

2. A method according to claim 1 wherein the step of positioning the tape (111) includes the step of positioning the tape at the beginning of the tape media.

3. A method according to any preceding claim wherein the step of playing the tape (113) includes the step of playing the tape at a speed that is about 5 to 15 times faster than normal playback speed.

4. A method according to any preceding claim wherein the step of the reading the subcode tape format identification information (119) includes the step of determining whether the subcode tape format identification information from a predetermined number of frames consistently indicate an audio format, which provides a reliable indication that the tape is an audio tape.

5. A method according to any preceding claim wherein the step of reading the subcode tape format identification information (119) includes the step of disregarding the initial portion of the tape ahead of the predetermined tape reference location.

6. A method according to any preceding claim further comprising the step of stopping the tape if neither audio nor data format is detected (131).

7. Apparatus for detecting the format of a DAT tape in accordance with the method as claimed in claim 1, comprising:
means (73) for reading a DAT tape which include decode means (21) for detecting subcode formats on the tape;
means (71,75) for playing the tape at a speed sufficiently slow to allow detection of subcode format identification information (113) by said decode means;
means (11,77) for calculating tape length; and
means (11) for engaging a data mode of operation (135) if the subcode tape format identification information indicates a data format (129); and characterised in that there is additionally provided means (11,71,75) for reducing tape speed to normal playback speed if either the subcode tape format identification information reliably indicates an audio format (121,123) or a predetermined amount of tape has been played from a predetermined tape location (125,127).

## Patentansprüche

1. Verfahren zum Detektieren des Formats eines DAT-Bandes, mit den Schritten:
a) Positionieren des Bandes zum Lesen einer vorgegebenen Referenzstelle des Bandes, um zu gewährleisten, daß auf dem Band vorhandene Bandformat Identifizierungsdaten bei der Wiedergabe (111) erfaßt werden;
b) Abspielen des Bandes bei ausreichender Geschwindigkeit, um das Detektieren einer Subcodeformat-Identifizierungsinformation (113) zu ermöglichen;
c) Berechnen der Bandlänge (115);
d) Lesen der Subcode-Bandformat-Identifizierungsinformation (119) von dem Band; und
e) Inbetriebsetzen eines Datenbetriebsmodus (135), wenn die Subcode-Bandformat-Identifizierungsinformation ein Datenformat (129) angibt,
**gekennzeichnet** durch die Schritte:
f) Herabsetzen der Bandgeschwindigkeit auf normale Wiedergabegeschwindigkeit, wenn entweder die Subcode-Bandformat-Identifizierungsinformation zuverlässig ein Audioformat (121, 123) anzeigt oder wenn eine vorgegebene Bandmenge von einer vorgegebenen Bandstelle (125, 127) aus abgespielt worden ist.

2. Verfahren nach Anspruch 1,
bei dem der Schritt des Positionierens des Bandes (111) das Positionieren des Bandes am Beginn des Bandmediums umfaßt.

3. Verfahren nach einem der vorangehenden Ansprüche,
bei dem der Schritt des Abspielens des Bandes (113) das Abspielen des Bandes mit einer Geschwindigkeit umfaßt, die etwa 5 bis 15 mal schneller als normale Wiedergabegeschwindigkeit ist.

4. Verfahren nach einem der vorangehenden Ansprüche,
bei dem der Schritt des Lesens der Subcode-Bandformat-Identifizierungsinformation (119) den Schritt umfaßt zu bestimmen, ob die von einer vorgegebenen Anzahl von Rahmen erhaltene Subcode-Bandformat-Identifizierungsinformationen beständig ein Audioformat anzeigen, was eine zuverlässige Angabe darüber liefert, daß das Band ein Audioband ist.

5. Verfahren nach einem der vorangehenden Ansprüche,
wobei bei dem Schritt des Lesens der Subcode-Bandformat-Identifizierungsinformation (119) der Anfangsteil des Bandes vor der vorgegebenen Bezugsstelle des Bandes außer Betracht gelassen wird.

6. Verfahren nach einem der vorangehenden Ansprüche,
mit dem weiteren Schritt des Anhaltens des Bandes, wenn weder ein Audioformat noch ein Datenformat detektiert wird (131).

7. Vorrichtung zum Detektieren des Formats eines DRT-Bandes nach dem Verfahren gemäß Anspruch 1, mit:
Mitteln (73) zum Lesen eines DRT-Bandes, enthaltend Dekodermittel (21) zum Detektieren von Subcode-Formaten auf dem Band;
Mitteln (71, 75) zum Abspielen des Bandes bei einer Geschwindigkeit, die ausreichend langsam ist, um die Detektierung einer Subcode-Format-Identifizierungsinformation (13) durch die Dekodiermittel zu erlauben;
Mitteln (11, 77) zum Berechnen der Bandlänge; und Mitteln (11) zum Inbetriebsetzen eines Datenbetriebsmodus (135), wenn die Subcode-Bandformat-Identifizierungsinformation ein Datenformat (129) anzeigt;
dadurch **gekennzeichnet**, daß zusätzlich Mittel (11, 71, 75) vorgesehen sind zum Herabsetzen der Bandgeschwindigkeit auf normale Wiedergabegeschwindigkeit, wenn entweder die Subcode-Bandformat-Identifizierungsinformation zuverlässig ein Audioformat (121, 123) anzeigt oder wenn eine vorgegebene Bandmenge von einer vorgegebenen Bandstelle (125, 127) aus abgespielt wurde.

## Revendications

1. Procédé pour détecter le format d'une bande de cassette audio-numérique (DAT), comprenant les étapes de:
(a) positionnement de la bande pour lire un emplacement prédéterminé de référence de la bande pour garantir que toutes les données d'identification de format de bande sur la bande seront rencontrées au cours de la lecture (111);
(b) lecture de la bande à une vitesse suffisante pour permettre la détection d'informations de sous-code d'identification de format (113);
(c) calcul de la longueur de bande (115);
(d) lecture des informations de sous-code d'identification de format de bande (119) à partir de la bande; et
(e) lancement d'un mode de fonctionnement "données" (135) si les informations de sous-code d'identification de format de bande indiquent un format de données (129); caractérisé par les étapes de :
(f) réduction de la vitesse de bande à la vitesse de lecture normale si soit les informations de sous-code d'identification de format de bande indiquent de manière sûre un format audio (121, 123), soit une quantité prédéterminée de bande a été lue à partir d'un emplacement prédéterminé de bande (125, 127).

2. Procédé selon la revendication 1, dans lequel l'étape de positionnement de la bande (111) comprend l'étape de positionnement de la bande au début du support en forme de bande.

3. Procédé selon l'une quelconque des revendications précédentes, dans lequel l'étape de lecture de la bande (113) comprend l'étape de lecture de la bande à une vitesse qui est environ 5 à 15 fois plus rapide que la vitesse de lecture normale.

4. Procédé selon l'une quelconque des revendications précédentes, dans lequel l'étape de lecture des informations de sous-code d'identification de format de bande (119) comprend l'étape de détermination si les informations de sous-code d'identification de format de bande à partir d'un nombre prédéterminé de trames indiquent régulièrement un format audio, ce qui fournit une indication fiable que la bande est une bande magnétique pour enregistrement sonore.

5. Procédé selon l'une quelconque des revendications précédentes, dans lequel l'étape de lecture des informations de sous-code d'identification de format de bande (119) comprend l'étape consistant à ignorer la partie initiale de la bande en avant de l'emplacement prédéterminé de référence de la bande.

6. Procédé selon l'une quelconque des revendications précédentes, comprenant de plus l'étape d'arrêt de la bande si, ni un format audio, ni un format de données, ne sont détectés (131).

7. Appareil pour détecter le format d'une bande cassette audio-numérique (DAT) conformément au procédé selon la revendication 1, comprenant :
des moyens (73) pour lire une bande DAT qui comprennent des moyens de décodage (21) pour détecter des formats de sous-code sur la bande;
des moyens (71, 75) pour faire défiler la bande à une vitesse suffisamment lente pour permettre la détection des informations d'identification de format de sous-code (113) par lesdits moyens de décodage;
des moyens (11, 77) pour calculer la longueur de bande; et
des moyens (11) pour lancer un mode de fonctionnement "données" (135) si les informations d'identification de format de bande de sous-code indiquent un format de données (129); et caractérisé en ce que des moyens (11, 71, 75) sont en outre prévus pour réduire la vitesse de bande à une vitesse de lecture normale si soit les informations d'identification de format de bande de sous-code indiquent de manière sûre un format audio (121, 123), soit une quantité prédéterminée de bande a été lue à partir d'un emplacement prédéterminé de bande (125, 127).
